# EUROPEAN PATENT APPLICATION

(11) **EP 3 876 052 A1**
(43) Date of publication of application: **08.09.2021**
(21) Application number: 18938691.5
(22) Date of filing: 31.10.2018
(51) Int. Cl.: G05B 19/418

(54) **PRODUCTION ASSISTANCE SYSTEM**

(71) Applicant: Makino Milling Machine Co., Ltd., Tokyo 152-8578 (JP)
(72) Inventor: HATTORI, Yoshikazu, Aiko-gun, Kanagawa 243-0303 (JP); IGARI, Shinji, Aiko-gun, Kanagawa 243-0303 (JP); KODAMA, Takumi, Aiko-gun, Kanagawa 243-0303 (JP); ARAI, Wataru, Aiko-gun, Kanagawa 243-0303 (JP)
(74) Representative: McWilliams, David John
(86) International application number: PCT/JP2018/040609
(87) International publication number: WO 2020/090063

(57) **Abstract**

A production assistance system (10) which generates steps for producing a product on the basis of an order including information which should specify the product to be produced, a quantity or count by which the product is to be produced, and a due date by which the production is to be completed is provided with: an input unit (34) for inputting the order; a schedule computation unit (12) for generating, on the basis of the order input by the input unit, a schedule including information relating to a plurality of operation machines required to produce a product specified by the order, steps assigned to the respective operation machines, and a time required to execute each of the steps; a step division information providing unit (18) for dividing the steps of the generated schedule into a plurality of tasks as information which can be interpreted and executed by the operation machines; and a step instruction unit (14) for outputting instructions to the operation machines on the basis of the tasks from the step division information providing unit.

## Description

### FIELD

The present invention relates to a production support system which is suitable for high-mix low-volume production or multi-product variable production.

### BACKGROUND

In the manufacturing industry, in order to meet various needs, in addition to various standard products, various options are prepared to satisfy high-mix low-volume production or multi-product variable production by a production method called mass customization. As an example of a production system for such high-mix low-volume production or multi-product variable production, Patent Literature 1 describes, in a multi-product variable production line having a plurality of production processes, a system which accurately creates a process flow which matches the actual conditions of the line for each product as a baseline, and accurately changes the process flow for each product.

### [CITATION LIST]

[PTL 1] Japanese Unexamined Patent Publication (Kokai) No. 09-260235

### SUMMARY

### [TECHNICAL PROBLEM]

In recent years, the needs of the market are constantly changing, and they are changing very quickly. Thus, in order to meet these changing needs, it is difficult to construct a production system suitable for high-mix low-volume production or multi-product variable production which maintains high productivity.

The present invention aims to solve such problems of the prior art, and an object of the present invention is to provide a production system which performs machining by mixing various types of machining devices and which can easily generate highly-productive processes.

### [SOLUTION TO PROBLEM]

In order to achieve the above object, according to the present invention, there is provided a production support system for generating a process for producing a product based on an order including information for identifying the product to be produced, a volume or quantity to be produced, and a deadline when production is to be finished, the production support system comprising an input unit for inputting an order, a schedule calculation unit for generating, based on the order input from the input unit, a schedule including information related to a plurality of operation machines necessary for producing the product identified by the order, processes for which each operation machine is responsible, and a time needed to execute each process, a process breakdown information supply unit for breaking down each process of the generated schedule into a plurality of tasks, which are information which can be interpreted and performed by each operation machine, and a process command unit which outputs commands to each operation machine based on the tasks from the process breakdown information supply unit.

### [ADVANTAGEOUS EFFECTS OF INVENTION]

A schedule in which the contents of the order are better specified is generated based on the order including the product name, product number, or model number, volume or quantity, and delivery date, which are abstract for the production system and cannot be executed as-is, and based on this schedule, each process is broken down into a plurality of tasks, which are information which can be interpreted and executed by each operation machine, and commands are output to each operation machine based on the tasks. The schedule calculation unit creates a schedule so that a specific process does not significantly limit the production volume or become a bottleneck in the production process, whereby production efficiency of the entire production system can be improved. Furthermore, according to the present embodiment, even if a plurality of products are mixed in one production system, the operation machines constituting the production system can be efficiently operated, and in particular, a production system suitable for high-mix low-volume production or multi-product variable production can be constructed.

### BRIEF DESCRIPTION OF DRAWINGS

FIG. 1 is a block diagram showing a production support system according to a preferred embodiment of the present invention.
FIG. 2 is a block diagram showing a process plan or basic process stored in a process plan database in association with a product name, product number, or model number of a product to be produced.
FIG. 3 is a view showing an example of a schedule generated by a schedule calculation unit.
FIG. 4 is a view showing a workpiece transport process included in the schedule as a further subordinate concept process.
FIG. 5 is a view showing an example in which rough machining by cutting is broken down into more specific processes.
FIG. 6 is a view showing an example in which workpiece attachment and removal processes are broken down into more specific processes.
FIG. 7 is a view showing an example in which rough machining is broken down into more specific tasks that can be interpreted and executed at the machine level.
FIG. 8 is a view showing an example in which finishing machining by electric-discharge machining is broken down into more specific processes.
FIG. 9 is a view showing an example in which finishing machining by electric-discharge machining is broken down into more specific tasks that can be interpreted and executed at the machine level.
FIG. 10 is a view showing hierarchically-divided processes.
FIG. 11 is a view showing information related to tasks stored in a process breakdown information database.
FIG. 12 is a view showing an example of a series of tasks output from a process breakdown information supply unit to a process command unit.
FIG. 13 is a view showing another example of a series of tasks output from the process breakdown information supply unit to the process command unit.
FIG. 14 is a block diagram showing an example of a production system to which the present invention can be applied.

### DESCRIPTION OF EMBODIMENTS

The preferred embodiments of the present invention will be described below with reference to the attached drawings.

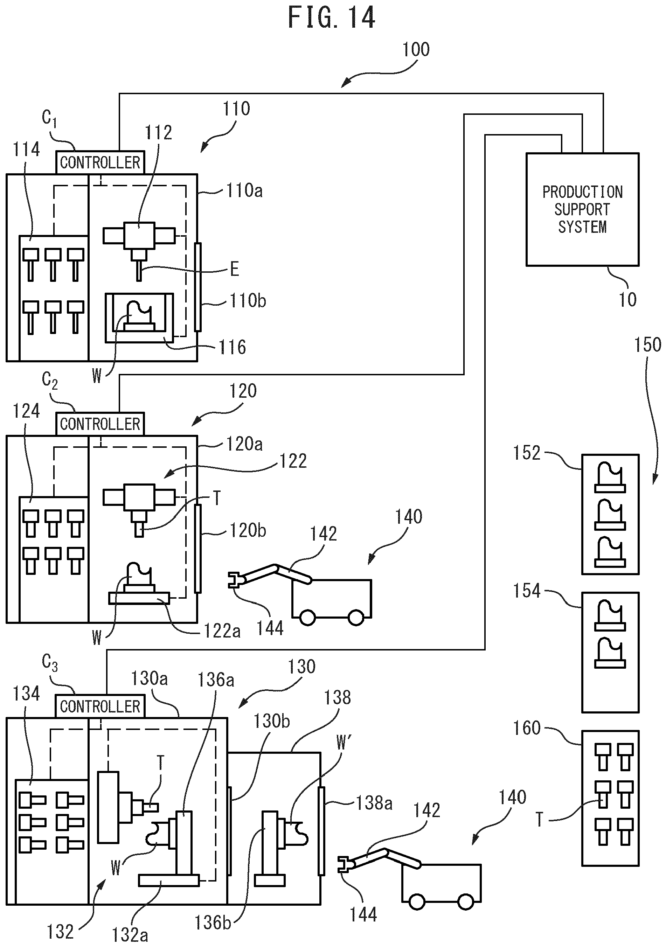

First, with reference to FIG. 14, a production system 100 is illustrated as an example of a production system to which the present invention can be applied. In the present example, the production system 100 comprises three machine tools 110, 120, 130 as at least one machine tool. The production system 100 further comprises a production support system 10 connected to the machine tools 110, 120, 130, a workstation 150, a tool station 160, and an autonomous transport vehicle 140 which transports a workpiece W, a tool T, or an electrode E between the machine tools 110, 120, 130 and the workpiece station 150 and tool station 160.

Note that in the present invention, the machine tools 110, 120, 130, and the autonomous transport vehicle 140 of the production system 100 are referred to as operation machines which execute processes. In FIG. 14, three machine tools 110, 120, 130 and two autonomous transport vehicles 140 are illustrated, but this is merely an example, and the present invention is not limited to the illustrated types and quantities of the operation machines.

The workstation 150 can comprise a delivery workstation 152 which holds raw workpieces and a discharge workstation 154 which holds machined workpieces. The tool station 160 can hold spare tools and unused electrodes.

The machine tool 100 is an electric discharge machine, and comprises an electric discharge machine body 112 and an electrode exchange device 114 in which a plurality of electrodes are stored. The electrode exchange device 114 exchanges a stored electrode with the electrode E attached to the tip of a spindle (not illustrated) of the electric discharge machine body 112 as needed. The electric discharge machine body 112 comprises a machining tank 116 provided so as to be movable relative to the electrode E of the spindle. The electric discharge machine body 112, the electrode exchange device 114, and the machining tank 116 are housed in a cover 110a. The electric discharge machine 110 also comprises a controller C1 such as an NC device which controls the electric discharge machine body 112, the electrode exchange device 114, and the machining tank 116. The electric discharge machine 110 electric-discharge machines the workpiece W immersed in working fluid filled in the machining tank 116 with the electrode E. The electric discharge machine body 112 can be a fine-pore electric-discharge machine, a die-sinking electric-discharge machine, or a wire electric-discharge machine.

In FIG. 14, the machine tool 120, which is a first machine tool, is a vertical machining center and comprises a cutting machine 122 such as a vertical milling machine and a tool exchange device 124 in which a plurality of tools are stored. The machining device 122 and the tool exchange device 124 are housed in a cover 120a. The machine tool 120 also comprises a controller C2, such as an NC device. The tool exchange device 124 selects a tool to be used for machining from the plurality of stored tools in accordance with a machining program input to the controller C2, and exchanges the selected tool for the tool T attached to a spindle 122b of the machining device 122 as needed. The machine tool 120 moves the tool T attached to the spindle 122b and the workpiece W attached to a table 122a relative to each other to cut the workpiece W with the tool T.

In FIG. 14, the machine tool 130, which is a second machine tool, is a horizontal machining center and comprises a cutting machine 132 such as a horizontal milling machine, a tool exchange device 134 in which a plurality of tools are stored, and a workpiece exchange device 138. The machining device 132 and the tool exchange device 134 are housed in a cover 130a. The cover 130a is provided with a door 130b that opens and closes between the machining chamber where machining is performed and the internal space of the workpiece exchange device 138. The machine tool 130 also comprises a controller C3, such as an NC device. The tool exchange device 134 selects a tool to be used for machining from the plurality of stored tools in accordance with a machining program input to the controller C3, and replaces the tool T attached to the spindle 132b of the machining machine 132 as needed. In the machine tool 130, the workpiece W is attached to a table 132a via an angle plate 136a. The machine tool 130 moves the tool T attached to the spindle 132b and the workpiece W attached to the table 132a relative to each other to cut the workpiece W with the tool T.

In the workpiece exchange device 138, a raw workpiece W' waiting attached to an angle plate 136b is exchanged with a machined workpiece W when the machining currently in progress is completed. The door 138a provided on the side surface of the cover of the workpiece exchange device 138 is opened, and the machined workpiece W is transported by the autonomous transport vehicle 140 to the outside, i.e., for example, the discharge workstation 154 which temporarily holds the machined workpiece W.

The autonomous transport vehicle 140 is a trackless autonomous transport vehicle which is connected to the production support system 10 by wireless communication such as wireless LAN and is controlled by the production support system 10, and comprises an articulated robot arm 142 and an end effector 144 such as a robot hand attached to the tip of the robot arm 142. The end effector 144 can grip or hold the workpiece W or the pallet (not illustrated) to which the workpiece W is attached, the tool T and the tool holder to which the tool T is attached, the electrode E and the electrode holder (not illustrated) to which the electrode E is attached.

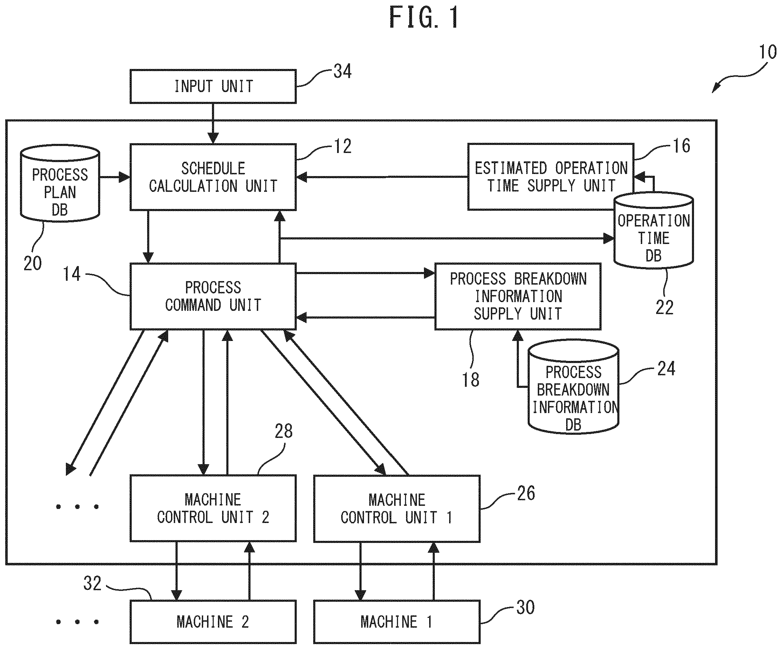

With reference to FIG. 1, the production support system 10 comprises, as primary constituent elements, a schedule calculation unit 12, a process command unit 14, an estimated operation time supply unit 16, a process breakdown information supply unit 18, a process plan database 20, an operation time database 22, a process breakdown information database 24, and a plurality of machine control units 26, 28, and these constituent elements can be constituted from one or a plurality of computing devices comprising a microprocess such as a CPU (central processing unit), memory devices such as RAM (random access memory) and ROM (read-only memory), storage devices such as an HDD (hard disk drive) and SSD (solid state drive), input/output ports, and bidirectional buses which interconnect them as well as associated software. The production support system 10 is connected to the controllers C1, C2, C3 of the machine tools 110, 120, 130 of the production system 100, outputs commands to the controllers C1, C2, C3, and receives data from the controllers C1, C2, C3.

An order is input to the schedule calculation unit 12 through an input unit 34. The order can include, for example, information for identifying the product to be produced, such as the product name, product number, or model number, information regarding the volume or quantity to be produced, and information regarding the deadline or delivery date when production should be completed. The order may include information regarding options which are changes from the standard products. The order can be input by the user operating the production system 100 or the operator of the production system 100. When the user or operator of the production system 100 performs input, the input unit 34 can be a computing device (personal computer or tablet) connected to the production support system 10 via a network such as a LAN. Furthermore, the order may be input by the requestor or customer of the product. In that case, the input unit 34 can be a computing device (personal computer or tablet) of the requestor or the customer connected via the Internet. Alternatively, the input unit 34 can be a server of the user of the production system 100 connected to the computer of the requestor or customer via the Internet.

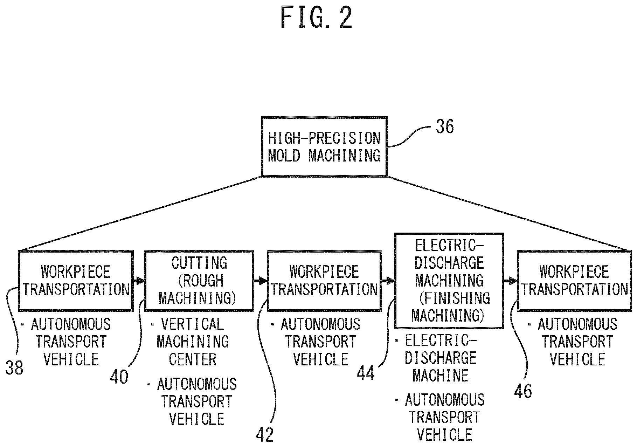

The schedule calculation unit 12 references the process plan database 20 based on the order input from the input unit 34, and outputs a schedule to the process command unit 14. The process plan database 20 stores process plans or basic processes in association with product names, product numbers, or model numbers of the products to be produced, as shown in FIG. 2. FIG. 2 shows, as an example, that the process 26 for producing a mold A by high-precision mold machining includes a workpiece transport process 38, by which the workpiece W is transported by the autonomous transport vehicle 140 to the machine tool 120 or 130 for cutting, a rough machining process 40 by cutting with the machine tool 120 or 130, a workpiece transport process 42, by which the workpiece W is transported by the autonomous transport vehicle 140 from the machine tool 120 or 130 for cutting machining to the machine tool 110 for electric-discharge machining, a finishing process 44 for electric-discharge machining by the machine tool 120 for electric discharge-machining, and a workpiece transport process 46 by which the workpiece W is transported by the autonomous transport vehicle 140 from the machine tool 120 for electric-discharge machining to the workstation 154 for discharging.

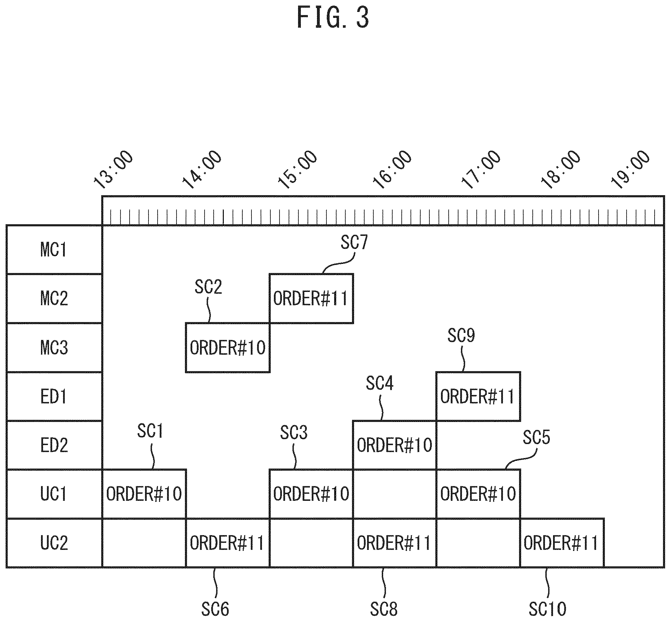

The schedule calculation unit 12 outputs the process plan (FIG. 2) obtained by referring to the process plan database 20 to the estimated operation time supply unit 16. The estimated operation time supply unit 16 determines the time required for each process 38 to 46 with reference to the operation time database 22. In the operation time database 22, the estimated time for each of the operation machines 110 to 140 (the operation machines MC1, MC2, MC3, ED1, ED2, UC1, and UC2 in FIG. 3, which is described later) of the production system 100 to execute the related processes 38 to 46 is set in advance and stored.

The schedule calculation unit 12 aggregates the time required for each process 38 to 46 output from the estimated operation time supply unit 16, and as shown in FIG. 3, outputs, to the process command unit 14, a schedule for producing the product with the production system 100 in accordance with the order input from the input unit 34. In FIG. 3, MC1, MC2, MC3, ED1, ED2, UC1, and UC2 are operation machines, and the horizontal axis is the time required for each operation machine MC1, MC2, MC3, ED1, ED2, UC1 and UC2 to execute the process.

It should be noted that in FIG. 14, the production system 100 including two machine tools 120 and 130 for cutting and one machine tool 110 for electric-discharge machining has been described as a production system to which the present invention can be applied, and in FIG. 3, the schedule is for a production system including three machine tools MC1, MC2, MC3 for cutting, two machine tools ED1 and ED2 for electric-discharge machining, and at least two autonomous transport vehicles UC1 and UC2.

FIG. 3 shows the case in which two orders #10 and #11 are input to the schedule calculation unit 12. In FIG. 3, the two orders #10 and #11 shown as examples are both orders for molds which are produced with high precision requiring rough machining 46 by cutting and finishing machining 44 by electric-discharge machining, as shown in FIG. 2. In FIG. 3, SC1 to SC5 represent each of the processes for producing the mold according to order #10, and SC6 to SC10 represent each of the processes for producing the mold according to order #11. The processes SC1 to SC5 and SC6 to SC10 in FIG. 3 correspond to the processes of processes 38 to 46 in FIG. 2.

More specifically, in FIG. 3, in order to produce the mold according to order #10, a raw workpiece is transported by the autonomous transport vehicle UC1 to the machine tool MC3 for cutting (SC1), the raw workpiece is rough-machined by cutting by machine tool MC3 (SC2), the rough-machined workpiece is transported by the autonomous transport vehicle UC1 to the machine tool ED1 for electric-discharge machining (SC3), the rough-machined workpiece is finished by electric-discharge machining by the machine tool ED1 (SC4), and the finished workpiece is transported to the discharge workstation by the autonomous transport vehicle UC1 (SC5). From FIG. 3, it can be understood that regarding order #10, all processes are completed around 5:30 pm.

Likewise, in order to produce the mold according to order #11, a raw workpiece is transported by the autonomous transport vehicle UC2 to the machine tool MC2 for cutting (SC6), the raw workpiece is rough-machined by cutting by the machine tool MC2 (SC7), the rough-machined workpiece is transported by the autonomous transport vehicle UC2 to the machine tool ED2 for electric-discharge machining (SC8), the rough-machined workpiece is finished by electric discharge machining by the machine tool ED2 (SC9), and the finished workpiece is transported to the discharge workstation by the autonomous transport vehicle UC2 (SC10). From FIG. 3, it can be understood that regarding order #11, all processes are completed around 6:30 pm.

The schedule calculation unit 12 accounts for the currently available operation machines MC1, MC2, MC3, ED1, ED2, UC1, and UC2, and the time required for each operation machine to execute each process SC1 to SC5 and SC6 to SC10 in this manner, whereby, regarding both order #10 and order #11, a schedule with which the products can be produced by the delivery date is created.

The process command unit 14 outputs the schedule received from the schedule calculation unit 12 to the process breakdown information supply unit 18, as will be described later. The process breakdown information supply unit 18 further breaks down each process SC1 to SC5 and SC6 to SC10 described in the schedule with reference to the process breakdown information database 24 based on each process SC1 to SC5 and SC6 to SC10 described in the received schedule.

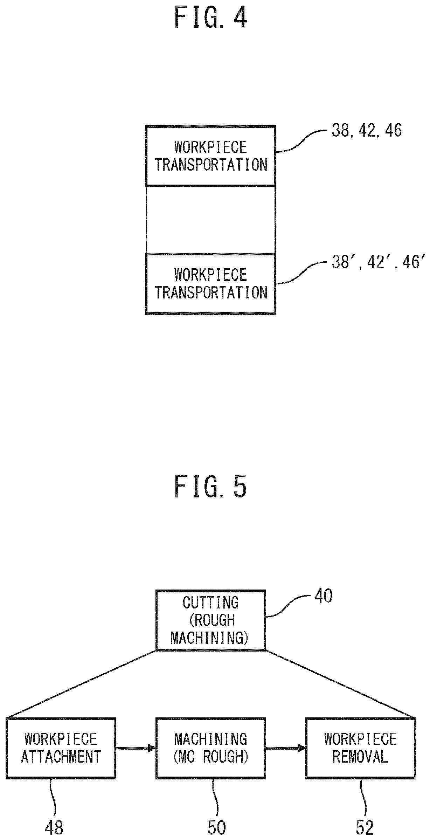

For example, the workpiece transport processes 38 (processes SC1, SC6 in FIG. 3), 42 (processes SC3, SC8 in FIG. 3), and 46 (processes SC5, SC10 in FIG. 3) of FIG. 2, respectively include one process 38', 42', 46' which cannot be further broken down, as shown in FIG. 4.

Conversely, the rough machining process 40 (processes SC2, SC7 in FIG. 3) by cutting of FIG. 2 can be broken down into a workpiece attachment process 48 in which a raw workpiece W is attached to, for example, the table 122a or 132a of the machine tool 120 or 130, a machining process 50, and a process 52 of removing from the table 122a or 132a, as shown in FIG. 5.

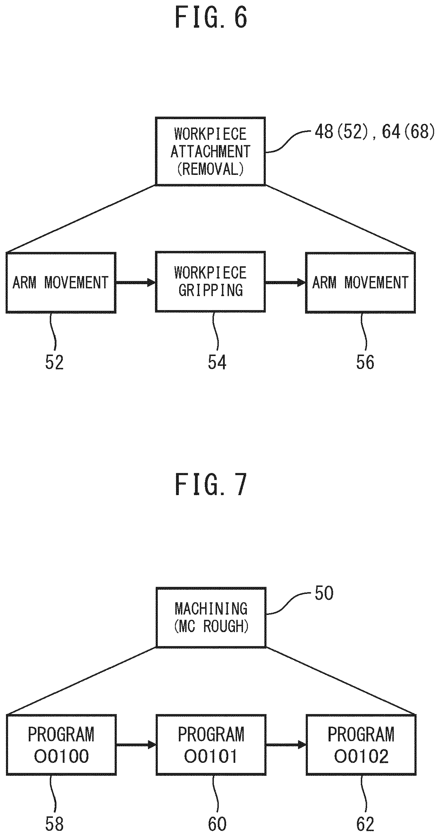

With reference to FIG. 6, the workpiece attachment process 48 (process 64 in the case of electric-discharge machining, which is described later) or workpiece removal process 52 (or process 68 in the case of electric-discharge machining, which will be described later) can be broken down into process 52 in which the robot arm 142 of the autonomous transport vehicle 140 moves toward one workpiece on the delivery workstation 152, process 54 in which the workpiece is gripped by the end effector 144, and process 56 in which the robot arm 142 is moved towards the table 122a of the machine tool 120 or the workpiece exchange device 138 of the machine tool 130. In the workpiece removal process, the order of the processes is reversed, but this can also be broken down into three processes.

The machining process 50 of FIG. 5 can be further broken down into one or a plurality of more specific processes in which individual machining programs are executed. In FIG. 7, the machining process 50 is broken down into three processes 58, 60, 62 in which machining programs O0100, O0101, and O0102 are executed.

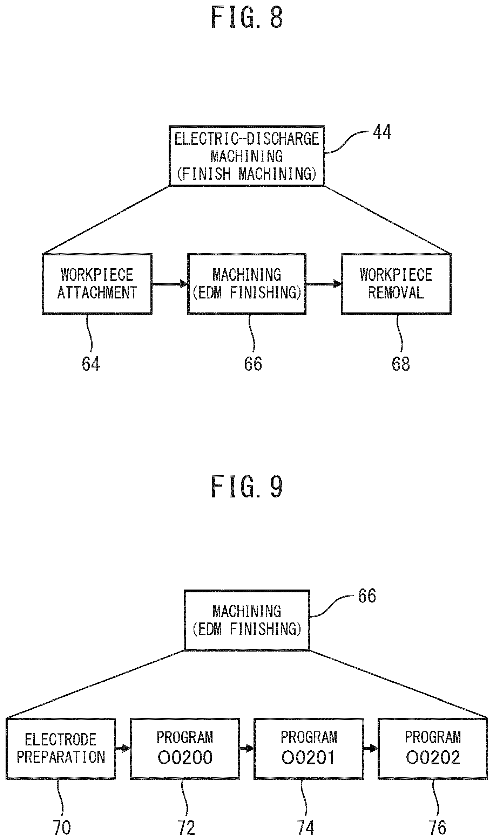

The finishing machining process 44 (processes SC4, SC9 in FIG. 3) by electric-discharge machining of FIG. 2 can be broken down into a workpiece attachment process 64 in which the rough-machined workpiece W is affixed to, for example, the table 112a of the machine tool 110, a machining process 66, and a process 68 of removing from the table 112a, as shown in FIG. 8. The machining process 66 of FIG. 8 can be further broken down into a process 70 in which the electrode E is prepared and one or a plurality of processes, including the three processes 72, 74, 76 in which machining programs O0200, O0201, and O0202 are executed in FIG. 9.

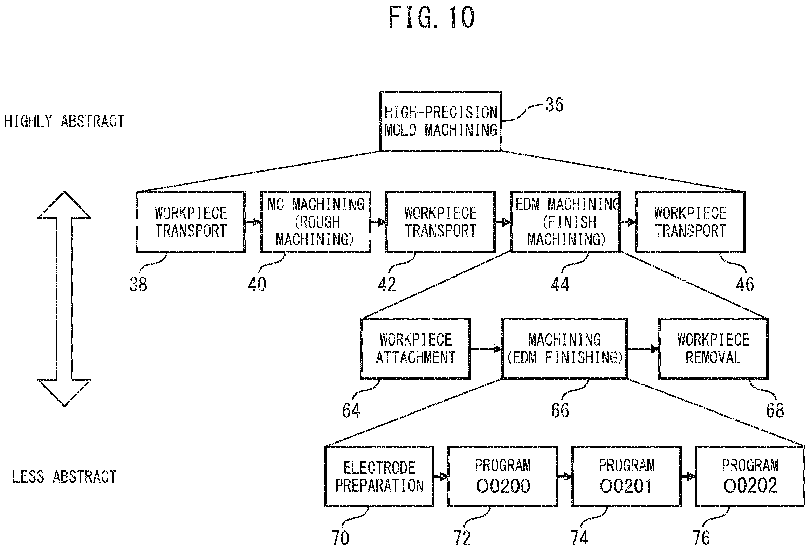

In this manner, the abstract process plan or basic processes stored in the process plan database 20 can be broken down into a large number of processes for each more specific (less abstract) hierarchy, as shown in FIG. 10.

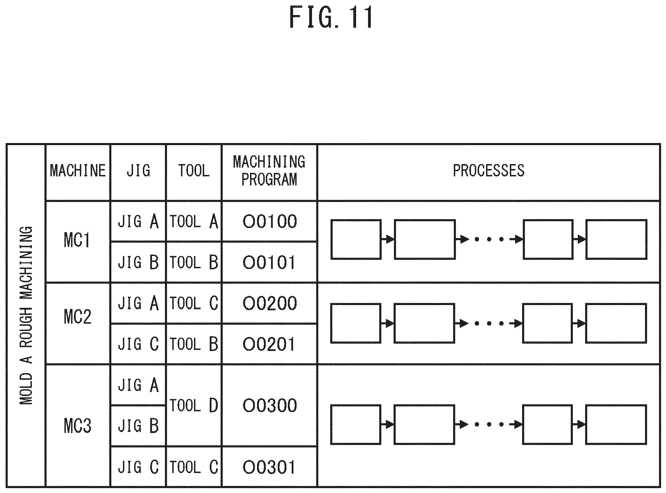

The process breakdown information database 24 stores the broken-down specific processes (tasks) in association with each of the operation machines MC1, MC2, MC3, ED1, ED2, UC1 and UC2. By breaking down (subdividing) each process in this manner, the content of each process becomes more specific, whereby tasks which can be interpreted and executed at the machine level can be obtained. As shown as an example in FIG. 11, regarding the process of rough machining the mold A by cutting (process 50 in FIG. 7), the process breakdown information database 24 associates the process 50 with each of the operation machines MC1, MC2, and MC3 as machine tools capable of executing, and stores the jigs and tasks to be used in the form of a combination table.

For example, based on the schedule received by the process command unit 14 from the schedule calculation unit 12, the process of "executing rough machining of the mold A with the machine tool (operation machine) MC1" is output to the process breakdown information supply unit 18. The process breakdown information supply unit 18 refers to the process breakdown information database 24 based on the received process, finds the jigs, tools, machining programs, and tasks which match the schedule created by the schedule calculation unit 12, and outputs them to the process command unit 14.

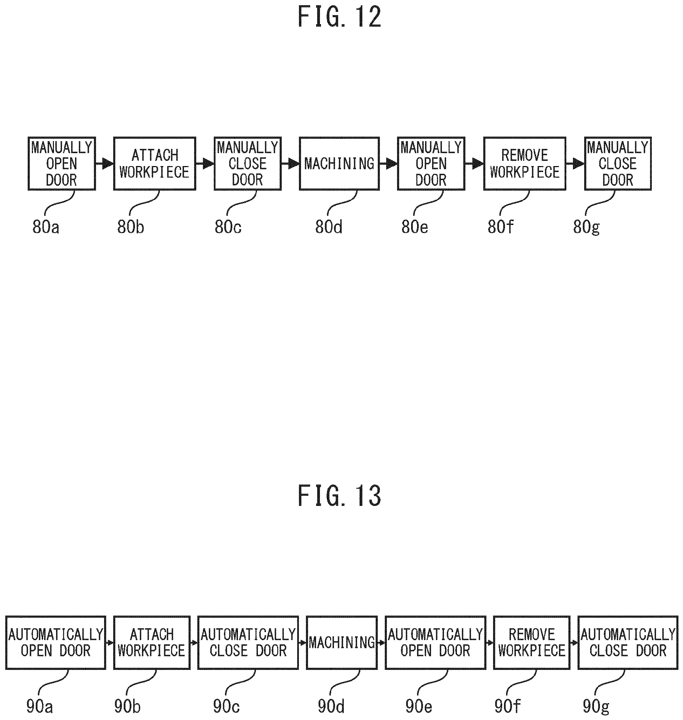

Even if the mold A can be rough-machined by either the machine tool MC1 or the machine tool MC2, the specific tasks and machining times thereof are different, and thus, the time required for rough machining of the mold A differs accordingly. For example, in the machine tool MC1, when the mold A is rough-machined as shown in FIG. 12, the door (for example, door 120b in FIG. 14) is manually (with the end effector 144 of the autonomous transport vehicle 140) opened (process 80a), the workpiece W is attached (with the end effector 144 of the autonomous transport vehicle 140) to the table (for example, 122a in FIG. 14) (process 80b), the door (for example, door 120b in FIG. 14) is manually (with the end effector 144 of the autonomous transport vehicle 140) closed (process 80c), cutting is performed (process 80d), the door is manually opened again (process 80e), the workpiece W is removed (with end effector 144 of autonomous transport vehicle 140) from the table (process 80f), and the door is manually closed again (process 80g), whereas in the machine tool MC2, the door is opened automatically (process 90a), the workpiece W is attached (with the end effector 144 of the autonomous transport vehicle 140) to the table (process 90b), the door is closed automatically (process 90c), cutting is performed (process 90d), the door is automatically opened again (process 90e), the workpiece W is removed (with the end effector 144 of the autonomous transport vehicle 140) from the table (process 90f), and the door is automatically closed again (process 90g), as shown in FIG. 13. The specific tasks for rough machining the mold A may differ in this manner for each machine tool.

The process command unit 14 outputs commands to each of the operation machines 30, 32, ... (operation machines MC1, MC2, MC3, ED1, ED2, UC1, UC2 in FIG. 2) based on the jigs, tools, machining programs, and tasks received from the process breakdown information database 24. At that time, by outputting commands to each operation machine 30, 32, ... via the machine control units 26, 28, ..., each command can be converted into a command of the machine control units 26, 28, ..., in, for example, a format suitable for the protocol.

Though the order, which includes a known product name, product number, or model number, such as the mold A, volume or quantity, and delivery date, can be considered commands or instructions which are easy for humans to understand, such an order is abstract for the production system and cannot be executed as-is. In the present embodiment, the process plan, which is a process model in which the contents of the order are broken down into one or a plurality of processes which are more concrete, is set in advance, is stored in the process plan database 20 in association with product name, product number, or model number, each process of the process plan is created in advance as process breakdown information which is further broken down into one or a plurality of processes, and stored in the process breakdown information database 24, and by referring to databases 20 and 24 when order is input, more specific tasks which can be interpreted and executed at the machine level can be generated from abstract instructions (the order).

More specifically, in the present embodiment, the schedule calculation unit 12 creates a schedule based on the input order, and based on the schedule, each process is broken down into more specific processes, and commands are output to each operation machine 30, 32, ... (operation machines MC1, MC2, MC3, ED1, ED2, UC1, UC2 in FIG. 2) forming the production system. Since the schedule calculation unit 12 creates a schedule so that a specific process does not significantly limit the production volume or become a bottleneck in the production process, the production efficiency of the entire production system 100 can be improved. Furthermore, according to the present embodiment, even if a plurality of products are mixed in one production system, the operation machines constituting the production system can be efficiently operated, whereby in particular, a production system suitable for high-mix low-volume production or multi-product variable production can be constructed.

Note that in the embodiments described above, when the schedule calculation unit 12 creates the schedule, the schedule calculation unit 12 can be configured so as to receive, from the estimated operation time supply unit 16, an estimated value of the time (estimated time) required for each of the operation machines 110 to 140 (operation machines MC1, MC2, MC3, ED1, ED2, UC1, UC2) of the production system 100 to execute the related processes 38 to 46, which are set in advance and stored in the operation time database 22. However, the present invention is not limited thereto, and the actual time required when each of the operation machines 110 to 140 (operation machines MC1, MC2, MC3, ED1, ED2, UC1, UC2) of the production system 100 executes each process can be collected as actual data and stored in the operation time database 22. As a result, the accuracy of the schedule created by the schedule calculation unit 12 can be improved. In addition to the time actually required to execute the process, the actual data can be associated with the temperature at the time of executing the processes, and the tools, jigs, etc., used. Furthermore, the actual data of other factories equipped with the same operation machines 110 to 140 (operation machines MC1, MC2, MC3, ED1, ED2, UC1, UC2) may be collected and stored via a network such as the Internet.

### REFERENCE SIGNS LIST

- 10: Production Support System
- 12: Schedule Calculation Unit
- 14: Process Command Unit
- 16: Estimated Operation Time Supply Unit
- 18: Process Breakdown Information Supply Unit
- 20: Process Plan Database
- 22: Operation Time Database
- 24: Process Breakdown Information Database
- 100: Production System
- 100: Machine Tool
- 110: Electric Discharge Machine
- 110a: Cover
- 112: Electric Discharge Machine Body
- 112a: Table
- 114: Electrode Exchange Device
- 116: Machining Tank
- 120: Machine Tool
- 120a: Cover
- 120b: Door
- 122: Cutting Machine
- 122a: Table
- 122b: Spindle
- 124: Tool Exchange Device
- 130: Machine Tool
- 130a: Cover
- 130b: Door
- 132: Cutting Machine
- 132a: Table
- 132b: Spindle
- 134: Tool Exchange Device
- 136a: Angle Plate
- 136b: Angle Plate
- 138: Workpiece Exchange Device
- 138a: Door
- 140: Autonomous Transport Vehicle
- 142: Robot Arm
- 144: End Effector
- 150: Workstation
- 152: Delivery Workstation
- 154: Discharge Workstation
- 160: Tool Station

## Claims

1. A production support system for generating a process for producing a product based on an order including information for identifying the product to be produced, a volume or quantity to be produced, and a deadline when production is to be finished, the production support system comprising:
an input unit for inputting an order,
a schedule calculation unit for generating, based on the order input from the input unit, a schedule including information related to a plurality of operation machines necessary for producing the product identified by the order, processes for which each operation machine is responsible, and a time needed to execute each process,
a process breakdown information supply unit for breaking down each process of the generated schedule into a plurality of tasks, which are information which can be interpreted and performed by each operation machine, and
a process command unit which outputs commands to each operation machine based on the tasks from the process breakdown information supply unit.

2. The production support system according to claim 1, further comprising a process plan database in which the information related to the plurality of operations machines necessary for producing the product, the processes for which each operation machine is responsible, and the time needed to execute each process is stored in association with information for identifying each product.

3. The production support system according to claim 1, further comprising a process breakdown information database in which the tasks are stored in association with processes stored in a process plan database and each operation machine which executes the processes.

4. The production support system according to claim 1, further comprising an operation time database in which information related to the time needed for the operation machines to execute the processes included in the schedule is stored in association with the processes and the operation machines.

5. The production support system according to claim 4, wherein the actual time needed for the operation machines to execute the processes included in the schedule is stored in the operation time database.

6. The production support system according to claim 1, wherein the operation machines include a plurality of machine tools and an autonomous transport vehicle which transports a workpiece between the machine tools.
